# EUROPÄISCHE PATENTSCHRIFT

(11) **EP 0 660 130 B1**
(45) Veröffentlichungstag und Bekanntmachung des Hinweises auf die Patenterteilung: **02.05.1997**
(21) Anmeldenummer: 94112694.8
(22) Anmeldetag: 13.08.1994
(51) Int. Cl.: G01S 3/808

(54) **Verfahren zum Peilen von impulsförmig Schallwellen abstrahlenden Zielen**
Method for measuring the direction of arrival of pulsed sound waves emitted form targets
Méthode pour repérer la direction de cibles qui émettent des ondes acoustiques à impulsions

(30) Priorität: 24.12.1993 DE 4344419
(43) Veröffentlichungstag der Anmeldung: 28.06.1995
(73) Patentinhaber: STN ATLAS Elektronik GmbH, D-28305 Bremen (DE)
(72) Erfinder: Meuser, Wilfried, Dipl.-Ing., D-28357 Bremen (DE)

(56) Entgegenhaltungen:
- DE-A- 3 017 797
- US-A- 4 207 622

## Beschreibung

Die vorliegende Erfindung betrifft ein Verfahren zum Peilen von Zielen, die impulsförmig Schallwellen senden, der im Oberbegriff des Anspruchs 1 genannten Art.

In der Wasserschalltechnik werden von einem Trägerfahrzeug mit einer Sende-Empfangsanordnung Wasserfahrzeuge, z. B. Schiffe und U-Boote, geortet, indem Schallwellen impulsförmig abgestrahlt und Reflexionen an den Wasserfahrzeugen empfangen werden. Aus Einfallsrichtungen der reflektierten Schallwellen und Laufzeiten zwischen Senden und Empfangen werden Standorte der reflektierenden Wasserfahrzeuge ermittelt. Bei dieser sog. aktiven Ortungsmethode werden die ausgesendeten Schallwellen aber ebenfalls von den reflektierenden Wasserfahrzeugen oder auch anderen Empfangsanlagen, z.B. Bojen, empfangen und für eine sog. passive Peilung des Trägerfahrzeugs als Ziel ausgewertet. Eine dafür geeignete Peilanlage ist beispielsweise in der DE-OS 31 50 456 beschrieben, wobei ihre Antenne in einem Hüllkörper untergebracht ist, der sich unter dem Wasserfahrzeug befindet. Impulsform und Frequenzverlauf der empfangenen Schallwellen werden ausgewertet, um die Sende-Empfangsanlage und ihr Trägerfahrzeug zu klassifizieren und ggf. zu identifizieren.

Aus der US-PS 42 07 622 ist eine Peilanlage zum Peilen von Impulsen hochfrequenter Schallwellen bekannt, bei der vier Hydrophone nach Art einer Dipolkonfiguration an den Ecken eines Quadrats angeordnet sind. Die Diagonale des Quadrats bestimmt die Abstände der Hydrophone eines Paares. Da diese Abstände nicht klein gegen die Wellenlänge der ausgesendeten hochfrequenten Schallwellen sind, führt eine Summe-/Differenzauswertung der hochfrequenten Signale an den Hydrophonen jedes Paares nicht zu einer Achtercharakteristik, sondern zu einem Richtcharakteristikmuster mit Hauptkeule und gleich großen Nebenkeulen, sog. Grating-Lobes. Eine eindeutige Peilung ist damit nicht möglich. In der US-PS 42 07 622 wird deshalb die Einhüllende der Schallwellen gebildet, mit einem tieferfrequenten Signal moduliert und ihre Zeitverschiebungen ausgewertet. Der Nachteil einer solchen Auswertung besteht darin, daß die empfangenen Schallwellen selbst nicht für die Peilung benutzt werden und die Peilgenauigkeit von der Einhüllenden oder der Impulsform der empfangenen Schallwellen bestimmt wird, deren Verlauf selbst unbekannt ist und durch die Ausbreitung stark gestört sein kann.

Es ist deshalb Aufgabe der vorliegenden Erfindung, ein Verfahren der im Oberbegriff des Anspruchs 1 genannten Art zu schaffen, bei dem die empfangenen Schallwellen selbst zur Peilung ausgewertet werden und trotz eines Empfangs über Hauptkeulen und Grating-Lobes eine eindeutige Peilung möglich ist.

Diese Aufgabe wird erfindungsgemäß durch die im Anspruch 1 genannten Merkmale gelöst.

Die Hydrophone jedes Paares in gekreuzter Dipolkonfiguration weisen beispielsweise einen Abstand auf, der fünfmal größer als die Wellenlänge der Schallwellen im empfangenen Impuls ist.

Bei schrägem Schalleinfall treffen die Schallwellen um eine Laufzeit verzögert beim zweiten Hydrophon des Paares ein, die größer als die Periodendauer der Schallwellen, aber nicht größer als das 5fache der Periodendauer ist. Bei einer Phasenauswertung der von den beiden Hydrophonen empfangenen Schallwellen, wie sie beispielsweise in der US-PS 42 07 622 oder der DE-PS 30 17 797 beschrieben ist, gibt die gemessene Phasenverschiebung, die zwischen 0 und 2π liegt, eine Schar von möglichen Einfallswinkels an, da der Abstand ein mehrfaches der Wellenlänge ist. Erfindungsgemäß werden alle diese möglichen Einfallswinkel aus der um jeweils ein Mehrfaches von 2π vergrößerten gemessenen Phasenverschiebung je Paar der Dipolkonfiguration und je Bezugspaar berechnet. Es wird mindestens ein Bezugspaar verwendet, das einen Drehwinkel zur Dipolkonfiguration aufweist. Die ermittelten möglichen Einfallswinkel des Paares werden entsprechend dem Drehwikel transformiert und mit den Einfallswinkeln des Bezugspaares vergleichen. Nur die wirkliche Empfangsrichtung der Schallwellen führt zu gleichen Einfallswinkeln beim Paar der Dipolkonfiguration und beim Bezugspaar.

Der Vorteil des erfindungsgemäßen Verfahrens nach Anspruch 1 besteht darin, daß der Abstand der Hydrophone so gewählt wird, daß die Paare der Dipolkonfiguration und die Bezugspaare einfach maßhaltig anzuordnen sind. Der Abstand ist wesentlich größer als eine halbe Wellenlänge, die zum Beispiel 7,5 mm bei einer Frequenz der Schallwellen von 100 kHz beträgt, so daß die gesamte Anordnung beispielsweise einen Systemdurchmesser von 5 cm aufweist. Eine Messung der Phasenverschiebung der empfangenen Signale jedes Paares und jedes Bezugspaares ist besonders einfach mit Standardbausteinen der Rechnertechnik durchführbar, wie sie beispielsweise in der DE-PS 30 17 797 beschrieben ist. Wenn die empfangenen Impulse eine geringe Bandbreite aufweisen, ist eine Phasenmessung bei ihrer Mittelfrequenz genau genug, um den Einfallswinkel zu bestimmen. Bei größerer Bandbreite ist eine Phasenmessung mit Hilfe komplexer Frequenzspektren der Empfangssignale zweckdienlich.

Bei der vorteilhaften Weiterbildung des erfindungsgemäßen Verfahrens nach Anspruch 2 werden acht Hydrophone im Kreis angeordnet, die zwei gekreuzte Paare und zwei um den Drehwinkel gedrehte, ebenfalls gekreuzte Bezugspaare bilden. Durch die Verwendung jeweils zweier Kreuze ist mit geringem rechnungstechnischen Aufwand eine quadrantengetreue Bestimmung des Einfallswinkels gegeben.

Zur Reduktion der Anzahl der Hydrophone werden gemäß der vorteilhaften Weiterbildung des erfindungsgemäßen Verfahrens nach Anspruch 3 jeweils drei Hydrophone in einem gleichseitigen rechtwinkligen Dreieck angeordnet, wobei das Hydrophon im rechten Winkel mit den beiden anderen Hydrophonen die gekreuzte Dipolkonfiguration bilden. In gleicher Weise wird ein Bezugsdreieck mit zwei Bezugspaaren aus drei Hydrophonen gebildet. Die beiden Dreiecke werden gegeneinander um einen Drehwinkel gedreht angeordnet. Der besondere Vorteil besteht darin, daß nur sechs Hydrophone mit entsprechenden Vorverstärkern und ggf. Analog-/Digitalwandlern benötigt werden.

Besonders vorteilhaft ist eine Anordnung der Hydrophone gemäß dem erfindungsgemäßen Verfahren nach Anspruch 4, da wegen der Geometrie die Berechnung der Einfallswinkel aus den möglichen Phasenverschiebungen für beide Dreiecke gleich ist.

Bei der vorteilhaften Weiterbildung des erfindungsgemäßen Verfahrens nach Anspruch 5 werden nur vier Hydrophone benötigt, um die beiden Paare der Dipolkonfiguration und die beiden Bezugspaare des Bezugsdreiecks zu bilden. Durch die dort angegebene Verschachtelung bestimmt das rechtwinklige Dreieck, das die Dipolkonfiguration bildet, die äußere Abmessung der gesamten Wandleranordnung. Das Bezugsdreieck ist halb so groß wie das Dreieck mit der Dipolkonfiguration und in diesem Dreieck enthalten. Der besondere Vorteil dieser Anordnung besteht darin, daß bei gleicher Peilgenauigkeit der gesamte Aufwand auf die Hälfte zurückgeht. Weiterhin ist vorteilhaft, daß die Wandleranordnung flach und langgezogen ist und dadurch keinen großen Strömungswiderstand bietet.

Nach der vorteilhaften Weiterbildung des erfindungsgemäßen Verfahrens nach Anspruch 6 werden die vier Hydrophone mit Vorverstärkern und ggf. Analog-/Digitalwandlern in einem strömungsgünstigen Hüllkörper angeordnet oder in Stromlinienform vergossen, wobei der Werkstoff den akustischen Eigenschaften des Wassers angepaßt ist. Die Gesamtlänge eines solchen scheibenförmigen Strömungskörpers beträgt beispielsweise 10 cm. Besondere Verstrebungen oder Versteifungen sind nicht vorzunehmen. Als Vorverstärker sind Ladungsverstärker besonders vorteilhaft einsetzbar, die zusammen mit dem Hydrophon eine Baueinheit bilden. Die verstärkten und gegebenenfalls digitalisierten Signale der Hydrophone werden über ein Kabel vom Strömungskörper an eine Auswerteeinheit übertragen. Ein solcher kompletter Strömungskörper ist sehr robust und mechanisch stabil. Er ist je nach Einsatz an der Außenwandung eines Wasserfahrzeugs montierbar oder absetzbar oder auch nachschleppbar. Ein Einsatz auf Peilbojen oder als "dipping-sonar" ist ebenfalls vorteilhaft möglich, bei dem die Signale beispielsweise über Funk an die Auswerteeinheit übertragen werden. Die Auswerteeinheit ist entweder an Bord des Wasserfahrzeugs oder eines Flugzeugs, das die Peilboje im Operationsgebiet absetzt, oder eines Hubschraubers für das "dipping-sonar" untergebracht.

Eine Vorrichtung zum Ausüben des erfindungsgemäßen Verfahrens ist in Anspruch 7 angegeben, bei der in FFT-Analysatoren die digitalisierten Signale der Hydrophone in komplexe Frequenzspektren gewandelt werden und Phasenauswerteschaltungen zugeführt werden. Nachgeordnete Einfallswinkelrechenschaltungen berechnen für die Paare der Dipolkonfiguration und die Bezugspaare die Einfallswinkel, die miteinander verglichen werden. Eine solche Auswerteeinheit enthält nur standardmäßig vorhandene Rechenschaltungen und ist somit kostengünstig zu realisieren.

Die Erfindung ist anhand eines in der Zeichnung dargestellten Ausführungsbeispiels für ein Verfahren zum Peilen von Zielen in der Wasserschalltechnik näher beschrieben. Es zeigen:
- Fig. 1: eine Dipolkonfiguration mit zwei Bezugspaaren in sternförmiger Anordnung ihrer Hydrophone,
- Fig. 2: eine Prinzipskizze mit einem Paar und einem Bezugspaar,
- Fig. 3: die Dipolkonfiguration mit zwei Bezugspaaren in dreieckförmiger Anordnung der Hydrophone,
- Fig. 4: eine Wandleranordnung mit vier Hydrophonen und
- Fig. 5: eine Vorrichtung mit Strömungskörper und Auswerteeinheit.

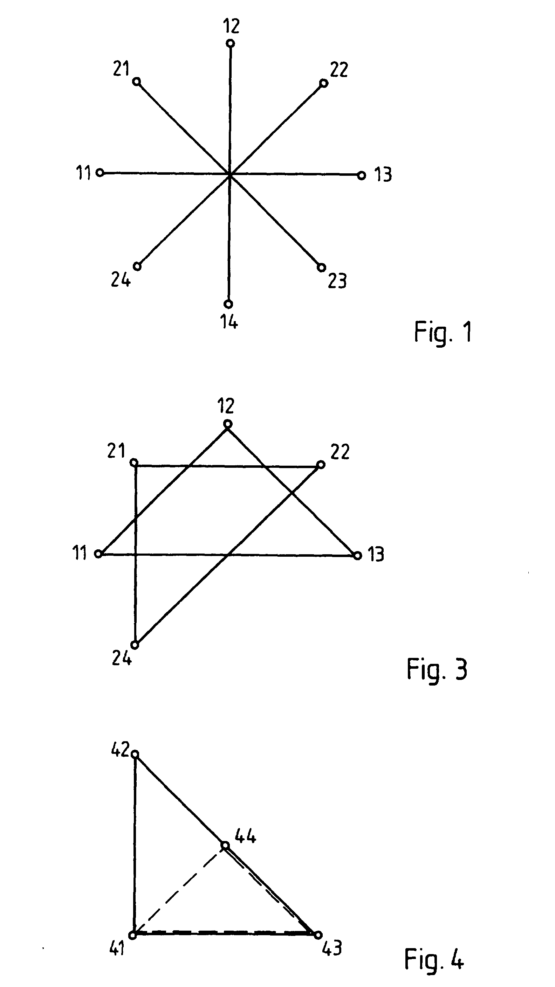

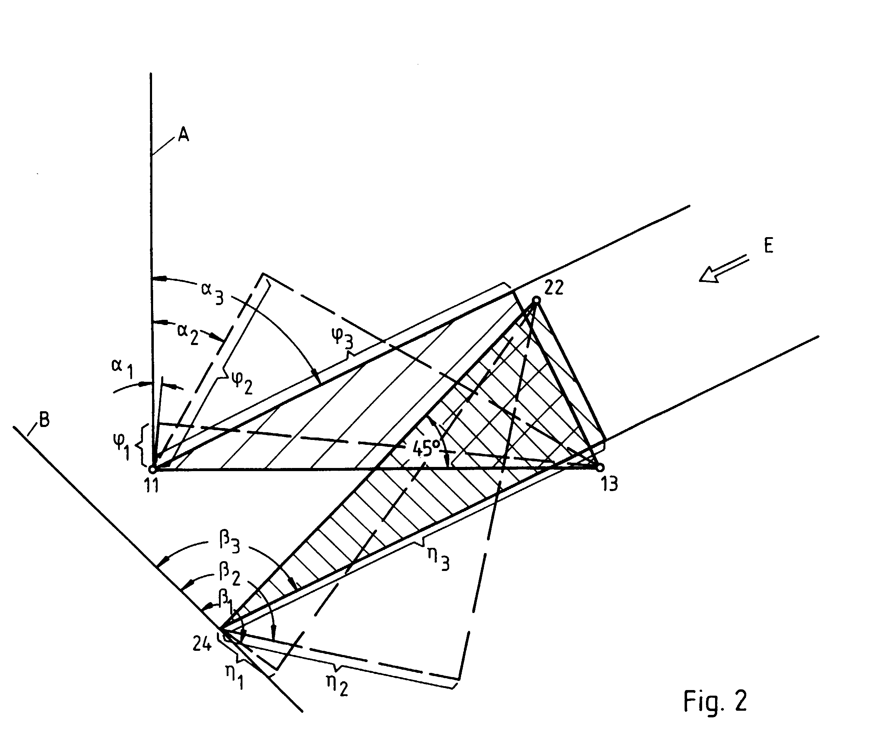

Zum Bestimmen der Einfallsrichtung von Schallwellen wird eine Wandleranordnung mit acht Hydrophonen verwendet, wie sie in Fig. 1 dargestellt ist. Die Hydrophone 11, 13 bilden ein Paar einer gekreuzten Dipolkonfiguration, dessen zweites Paar die Hydrophone 12, 14 aufweist. Der Abstand zwischen den Hydrophonen 11, 13 und 12, 14 jedes Paares ist ein Vielfaches der Wellenlänge der einfallenden Schallwelle. Um einen Drehwinkel von 45° ist gegen diese Dipolkonfiguration ein Bezugskreuz mit vier Hydrophonen 21, 22, 23, 24 angeordnet. Gegenüberliegende Hydrophone 21, 23 und 22, 24 bilden jeweils ein Bezugspaar. Ihre Abstände sind die gleichen wie bei den beiden Paaren.

Fig. 2 zeigt das Paar mit den Hydrophonen 11, 13, deren Abstand mehr als doppelt so groß wie die Wellenlänge λ der aus der Einfallsrichtung E einfallenden Schallwelle ist, beispielsweise 2,5 λ. Dieser Abstand entspricht einer Phasenverschiebung von 900°. Zuerst empfängt das Hydrophon 13 die Schallwelle. Um eine Zeit τ verzögert, das einer Phasenverschiebung ϕ3 = 810° = 90°+2·360° entspricht, empfängt das Hydrophon 11 die gleiche Schallwelle. Zwischen den empfangenen Signalen der Hydrophone 11 und 13 wird aber nur eine Phasenverschiebung ϕ1 = 90° gemessen. Aus dieser gemessenen Phasenverschiebung ϕ1 = 90° werden zwei weitere mögliche Phasenverschiebungen ϕ2 = 90°+360°=450° und ϕ3 = 90°+720°=810° berechnet. Die möglichen Phasenverschiebungen können jedoch nicht größer als 900° entsprechend dem Abstand der Hydrophone 11, 13 des Paares sein. Diese drei möglichen Phasenverschiebungen ϕ1, ϕ2, ϕ3 führen unter Berücksichtigung des Abstands zwischen den Hydrophonen 11 und 13 zu Einfallswinkeln α1=6°, α2=30° und α3=65° gegen eine Bezugsrichtung A.

Unter einem Drehwinkel von 45° ist das Bezugspaar mit den Hydrophonen 22, 24, die den gleichen Abstand aufweisen, angeordnet. Das Hydrophon 22 des Bezugspaares empfängt die Schallwelle aus der Einfallsrichtung E zuerst. Nach einer Verzögerungszeit, die einer Phasenverschiebung von η=860° entspricht, empfängt das Hydrophon 24 die gleiche Schallwelle.

Zwischen den Signalen der Hydrophone 22, 24 wird eine Phasenverschiebung η1=140° gemessen. Zu der gemessenen Phasenverschiebung η1=140° wird 360° und 720° hinzugezählt. Die zweite mögliche Phasenverschiebung ergibt sich zu η2=500° Die dritte mögliche Phasenverschiebung beträgt η3=860°. Zu diesen möglichen Phasenverschiebungen η1, η2, η3 gehören Einfallswinkel β1=171°, β2=148° und β3=110°, gemessen gegen eine Bezugsrichtung B, die gegenüber der Bezugsrichtung A einen Drehwinkel von 45° aufweist. Von den Einfallswinkeln β1, β2 und β3 des Bezugspaares wird der Drehwinkel abgezogen. Diese Winkeltransformation zeigt, daß β3-45°=65°=α2 ist und der Einfallswinkel α2 die Einfallsrichtung E der Schallwelle angibt.

Um zu entscheiden, ob das Ziel, das die Schallwellen abstrahlt, in Richtung der mit dem Pfeil gekennzeichneten Einfallsrichtung E liegt oder entgegengesetzt dazu, wird ein zweites Paar von Hydrophonen 12, 14 und ein Bezugspaar 21, 23 benötigt, wie in Fig. 1 gezeigt. Eine entsprechende Phasenauswertung führt zur eindeutigen Peilung zum Ziel.

Fig. 3 zeigt eine Wandleranordnung mit sechs Hydrophonen. Die Hydrophone 11, 12, und 13 bilden die beiden Paare der Dipolkonfiguration, wobei das Hydrophon 12 beiden Paaren gemeinsam ist. Die Hydrophone 21, 22 und 24 bilden ein Bezugsdreieck, dessen Hypotenuse um den Drehwinkel gegenüber der Hypotenuse des Dreiecks der Dipolkonfiguration gedreht ist. Durch entsprechende geometrische Umformungen wird in gleicher Weise, wie im Zusammenhang mit Fig. 2 erläutert, die Einfallsrichtung bestimmt.

Fig. 4 zeigt eine Wandleranordnung mit vier Hydrophonen. Die Hydrophone 41, 42, 43 sind Eckpunkte eines rechtwinkligen Dreiecks. Die Hydrophone 41, 42 bilden das eine Paar, die Hydrophone 41 und 43 das andere Paar der Dipolkonfiguration. Das Hydrophon 41 ist beiden Paaren gemeinsam. In die Mitte der Hydrophone 42, 43 auf der Hypotenuse ist das vierte Hydrophon 44 plaziert, das zusammen mit den Hydrophonen 41, 43 an den Endpunkten der gleichen Kathete ein gestrichelt eingezeichnetes Bezugsdreieck bildet. Die Hydrophone 44 und 41 bilden das eine Bezugspaar, die Hydrophone 44 und 43 das andere Bezugspaar. Das Hydrophon 44 ist beiden Bezugspaaren gemeinsam. Beide Dreiecke schließen einen Drehwinkel von 45° zueinander ein. Eine Bestimmung der möglichen Phasenverschiebungen und Einfallswinkel unter Berücksichtigung der unterschiedlichen Kathetenlängen ist in einfacher Weise möglich.

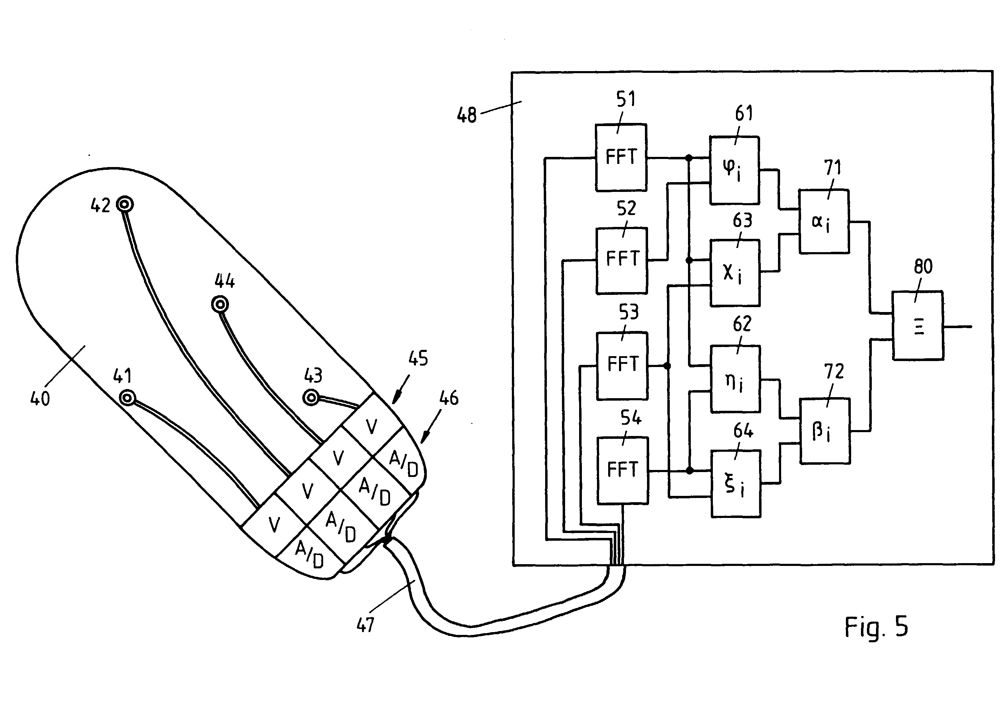

Die Wandleranordnung gemäß Fig. 4 ist in Fig. 5 zusammen mit Vorverstärkern 45 und Analog-/Digitalwandlern 46 in einem Strömungskörper 40 vergossen, der über ein Kabel 47 mit einer Auswerteeinheit 48 verbunden ist. In der Auswerteeinheit 48 werden empfangene, verstärkte und digitalisierte Signale der Hydrophone 41, 42, 43, 44 entsprechend ihrer Zuordnung zu den Paaren der Dipolkonfiguration und den Bezugspaaren ausgewertet. Die verstärkten digitalisierten Signale der Hydrophone 41, 42, 43 und 44 werden in FFT-Analysatoren 51 52, 53, 54 in komplexe Frequenzspektren gewandelt. In Phasenauswerteschaltungen 61, 62, 63, 64 werden die Phasenverschiebungen zwischen den komplexen Frequenzspektren ermittelt und mögliche Phasenverschiebungen durch Addition mit Mehrfachen von 360° berechnet. Die Phasenauswerteschaltung 61 liefert die möglichen Phasenverschiebungen ϕi für die Hydrophone 41 und 42 und ist mit den FFT-Analysatoren 51, 52 verbunden. In der Phasenauswerteschaltung 62 wird die gemessene und die um Vielfache von 360° vergrößerten Phasenverschiebungen ηi für die Hydrophone 41 und 44 des Bezugspaars gebildet. Dazu ist die Phasenauswerteschaltung 62 mit den FFT-Analysatoren 51 und 54 verbunden. Das zweite Paar der Dipolkonfiguration wird durch die Hydrophone 41 und 43 gebildet. Die zugehörigen FFT-Analysatoren 51 und 53 sind mit der Phasenauswerteschaltung 63 verbunden und liefern die Phasenverschiebungen χi, die zusammen mit den Phasenverschiebungen ϕi in einer Einfallswinkelrechenschaltung 71 zu Einfallswinkeln αi umgerechnet werden. Dasselbe gilt für das Bezugspaar, das die Hydrophone 43 und 44 bilden. Ihre FFT-Analysatoren 53 und 54 sind mit der Phasenauswerteschaltung 64 verbunden, die die Phasenverschiebungen ξi liefern. Diese Phasenverschiebungen ξi werden zusammen mit den Phasenverschiebungen ηi am Ausgang der Phasenauswerteschaltung 62 an eine zweite Einfallswinkelrechenschaltung 72 zum Berechnen der Einfallswinkel βi geschaltet. In einer Vergleichsschaltung 80, deren Eingänge mit den Einfallswinkeln αi und βi beaufschlagt sind, werden die Einfallswinkel αi der Paare und die um den Drehwinkel transformierten Einfallswinkel βi* der Bezugspaare verglichen und der Winkel αi=βi* ausgegeben, der die Einfallsrichtung E angibt.

## Patentansprüche

1. Verfahren zum Peilen von Zielen, die impulsförmig Schallwellen senden, mit einer Peilanlage in gekreuzter Dipolkonfiguration, bei der der Abstand der Hydrophone jedes Paares größer als eine halbe Wellenlänge der Schallwellen ist, dadurch gekennzeichnet, daß mindestens ein Bezugspaar von Hydrophonen (21, 22, 23, 24 bzw. 41, 44, 43) in einem Drehwinkel zu den Paaren von Hydrophonen (11, 12, 13, 14 bzw. 41, 42, 43) der Dipolkonfiguration angeordnet wird, daß eine Phasenverschiebung zwischen den Signalen der Hydrophone (11, 12, 13, 14 bzw. 41, 42, 43) jedes Paares und des Bezugspaares gemessen wird, daß jede gemessene Phasenverschiebung um Vielfache von 2π vergrößert wird, daß aus diesen Phasenverschiebungen (ϕi, χi, ηi, ξi) unter Berücksichtigung des Abstands der Hydrophone der Paare und des Bezugspaares mögliche Einfallswinkel (αi, βi) der Schallwellen berechnet werden, daß für jedes Paar die Summen von Einfallswinkeln (αi) und Drehwinkel ermittelt werden, daß die Summen mit den berechneten Einfallswinkeln (βi) des Bezugspaares verglichen werden und Gleichheit die Peilung zum Ziel angibt.

2. Verfahren nach Anspruch 1, dadurch gekennzeichnet, daß zwei Bezugspaare mit je zwei Hydrophonen (21, 23 bzw. 22, 24) gleichen Abstands ein Bezugskreuz bilden und das Bezugskreuz in einem Drehwinkel von 45° zur gekreuzten Dipolkonfiguration angeordnet wird.

3. Verfahren nach Anspruch 1, dadurch gekennzeichnet, daß drei Hydrophone (11, 12, 13) in einem gleichseitigen rechtwinkligen Dreieck angeordnet werden und die zwei Paare der Dipolkonfiguration bilden, wobei den Paaren das Hydrophon (12) im rechten Winkel gemeinsam ist, daß drei weitere Hydrophone (21, 22, 24) in einem gleichseitigen rechtwinkligen Bezugsdreieck angeordnet werden, die zwei Bezugspaare bilden, wobei den Bezugspaaren das Hydrophon (21) im rechten Winkel gemeinsam ist, daß die zwei so gebildeten Dreiecke um den Drehwinkel gegeneinander gedreht angeordnet werden und ihre Hypotenusen den Drehwinkel einschließen.

4. Verfahren nach Anspruch 3, dadurch gekennzeichnet, daß die Dreiecke gleich groß sind.

5. Verfahren nach Anspruch 1, dadurch gekennzeichnet, daß drei Hydrophone (41, 42, 43) in einem ersten gleichseitigen, rechtwinkligen Dreieck angeordnet werden und die zwei Paare der Dipolkonfiguration bilden, wobei den Paaren das Hydrophon (41) im rechten Winkel gemeinsam ist, daß ein viertes Hydrophon (44) auf der Hälfte der Hypotenuse des ersten Dreiecks angeordnet wird, und daß das vierte Hydrophon (44) mit den an der gleichen Kathete angeordneten Hydrophonen (41, 44) zwei Bezugspaare in einem rechtwinkligen Bezugsdreieck bilden, dessen Hypotenuse mit der Kathete des ersten Dreiecks zusammenfällt, wobei das vierte Hydrophon (44) im rechten Winkel des Bezugsdreiecks liegt.

6. Verfahren nach Anspruch 5, dadurch gekennzeichnet, daß die vier auf dem ersten Dreieck angeordneten Hydrophone (41, 42, 43, 44) mit Vorverstärkern (45) für ihre Empfangssignale sowie ggf. Analog/Digital-Wandlern (46) in einem strömungsgünstigen Hüllkörper (40) angeordnet oder vergossen werden.

7. Vorrichtung zum Peilen von Zielen, die impulsförmig Schallwellen senden, mit einer gekreuzten Dipolkonfiguration, bei der der Abstand der Hydrophone jedes Paares größer als eine halbe Wellenlänge der Schallwellen ist, zum Ausüben des Verfahrens nach Anspruch 5 oder 6, dadurch gekennzeichnet, daß Signale der vier Hydrophone (41, 42, 43, 44) auf je einen FFT-Analysator (51, 52, 53, 54) zum Bilden komplexer Frequenzspektren geschaltet sind, daß jedem FFT-Analysator (51, 52, 53) eine Phasenauswerteschaltung (61, 63 und 62, 64) für die Frequenzspektren jedes Paares und jedes Bezugspaares vorgesehen sind, daß den Phasenauswerteschaltungen (61, 63 und 62, 64) für die beiden Paare und die beiden Bezugspaare je eine Einfallswinkelrechenschaltung (71, 72) nachgeordnet ist zur Ermittlung der Einfallswinkel aus den gemessenen Phasenverschiebungen und den um Vielfache von 2π vergrößerten Phasenverschiebungen sowie den Abständen der Hydrophone jedes Paares und jedes Bezugspaares und daß die Einfallswinkelrechenschaltungen (71, 72) mit einer Vergleichsschaltung (80) verbunden sind.

## Claims

1. Method of measuring the bearings of targets transmitting sound waves in the form of pulses, with a bearing measurement system having a crossed dipole configuration in which the distance between the hydrophones of each pair is greater than half the wavelength of the sound waves, characterised in that at least one reference pair of hydrophones (21, 22, 23, 24 or 41, 44, 43) is arranged at an angle of rotation relative to the pairs of hydrophones (11, 12, 13, 14 or 41, 42, 43) of the dipole configuration, that a phase shift is measured between the signals of the hydrophones (11, 12, 13, 14 or 41, 42, 43) of each pair and of the reference pair, that each measured phase shift is increased by multiples of 2π, that from these phase shifts (ϕi, χi, ηi, ξi) possible angles of incidence (αi, βi) of the sound waves are computed taking account of the distance between the hydrophones of the pairs and of the reference pair, that the sums of angles of incidence (αi) and rotation angle are determined for each pair, that the sums are compared with the computed angles of incidence (βi) of the reference pair and equality indicates the bearing of the target.

2. Method in accordance with Claim 1, characterised in that two reference pairs with two hydrophones each (21, 23 or 22, 24) situated at equal distances apart form a reference cross and the reference cross is arranged at an angle of rotation of 45° relative to the crossed dipole configuration.

3. Method in accordance with Claim 1, characterised in that three hydrophones (11, 12, 13) are arranged to form an isosceles right-angled triangle and form the two pairs of the dipole configuration, where hydrophone (12) at the right angle is common to the pairs, that another three hydrophones (21, 22, 24) are arranged to form an isosceles right-angled reference triangle, forming two reference pairs, where hydrophone (21) at the right angle is common to the reference pairs, that the two triangles thus formed are arranged rotated relative to each other through the angle of rotation and their hypotenuses include the angle of rotation.

4. Method in accordance with Claim 3, characterised in that the triangles are equally large.

5. Method in accordance with Claim 1, characterised in that three hydrophones (41, 42, 43) are arranged to form a first isosceles right-angled triangle and form the two pairs of the dipole configuration, where hydrophone (41) at the right angle is common to the pairs, that a fourth hydrophone (44) is situated at the mid-point of the hypotenuse of the first triangle, and that the fourth hydrophone (44) together with the hydrophones (41, 43) situated on the same leg forms two reference pairs in a right-angled reference triangle whose hypotenuse coincides with the leg of the first triangle, where the fourth hydrophone (44) is situated at the right angle of the reference triangle.

6. Method in accordance with Claim 5, characterised in that the four hydrophones (41, 42, 43, 44) situated on the first triangle are situated in a streamlined sonar dome (40) or are encapsulated, together with preamplifiers (45) for their received signals and, if necessary, together with analog/digital converters (46).

7. Device for measuring the bearings of targets transmitting sound waves in the form of pulses, with a crossed dipole configuration in which the distance between the hydrophones of each pair is greater than half the wavelength of the sound waves, to perform the method of Claim 5 or 6, characterised in that signals from each of the four hydrophones (41, 42, 43, 44) are fed to individual FFT analysers (51, 52, 53, 54) to form complex frequency spectra, that for each FFT analyser (51, 52, 53) a phase evaluation circuit (61, 63 and 62, 64) is provided for the frequency spectra of each pair and of each reference pair, that the phase evaluation circuits (61, 63 and 62, 64) for the two pairs and the two reference pairs are each followed by an angle-of-incidence computing circuit (71, 72) for determining the angles of incidence from the measured phase shifts and the phase shifts increased by multiples of 2π and from the distances between the hydrophones of each pair and each reference pair, and that the angle-of-incidence computing circuits (71, 72) are connected to a comparison circuit (80).

## Revendications

1. Procédé de repérage de cibles qui envoient des ondes acoustiques sous forme d'impulsions, comportant une installation de repérage en configuration dipolaire croisée, dans laquelle la distance des hydrophones de chaque paire est supérieure à une demi-longueur d'onde des ondes acoustiques, caractérisé en ce qu'au moins une paire de référence d'hydrophones (21, 22, 23, 24 ou 41, 44, 43) est agencée avec un écart angulaire vis-à-vis des paires d'hydrophones (11, 12, 13, 14 ou 41, 42, 43) de la configuration dipolaire, en ce qu'un décalage de phase entre les signaux des hydrophones (11, 12, 13, 14 ou 41, 42, 43) de chaque paire et de la paire de référence est mesuré, en ce que chaque décalage de phase mesuré est agrandi de multiples de 2π, en ce qu'on calcule, à partir de ces décalages de phase (ϕi, χi, ηi, ξi), en tenant compte de la distance des hydrophones des paires et de la paire de référence, des angles d'incidence possibles (αi, βi) des ondes acoustiques, en ce que, pour chaque paire, on détermine les sommes des angles d'incidence (αi) et de l'écart angulaire, en ce que les sommes sont comparées avec les angles d'incidence calculés (βi) de la paire de référence et l'égalité indique le repérage de la cible.

2. Procédé selon la revendication 1, caractérisé en ce que deux paires de référence avec respectivement deux hydrophones (21, 23 ou 22, 24) de même distance forment une croix de référence et en ce que la croix de référence est agencée selon un écart angulaire de 45° vis-à-vis de la configuration dipolaire croisée.

3. Procédé selon la revendication 1, caractérisé en ce que trois hydrophones (11, 12, 13) sont agencés dans un triangle rectangle isocèle et forment les deux paires de la configuration dipolaire, l'hydrophone (12) qui se trouve dans l'angle droit étant commun aux paires, en ce que trois autres hydrophones (21, 22, 24) sont agencés dans un triangle de référence rectangle isocèle, qui forme deux paires de référence, l'hydrophone (21) qui se trouve dans l'angle droit étant commun aux paires de référence, en ce que les deux triangles ainsi formés sont agencés avec l'écart angulaire l'un vis-à-vis de l'autre et leurs hypoténuses incluent l'écart angulaire.

4. Procédé selon la revendication 3, caractérisé en ce que les triangles sont de même taille.

5. Procédé selon la revendication 1, caractérisé en ce que trois hydrophones (41, 42, 43) sont agencés dans un premier triangle rectangle isocèle et forment les deux paires de la configuration dipolaire, l'hydrophone (41) qui se trouve dans l'angle droit étant commun aux paires, en ce qu'un quatrième hydrophone (44) est agencé sur la moitié de l'hypoténuse du premier triangle, et en ce que le quatrième hydrophone (44) forme avec les hydrophones (41, 44) agencés sur le même côté de l'angle droit deux paires de référence dans un triangle de référence rectangle, dont l'hypoténuse coïncide avec le côté d'angle droit du premier triangle, le quatrième hydrophone (44) étant situé dans l'angle droit du triangle de référence.

6. Procédé selon la revendication 5, caractérisé en ce que les quatre hydrophones (41, 42, 43, 44) agencés sur le premier triangle sont agencés ou coulés dans un corps enveloppant (40) de forme hydrodynamique avec des pré-amplificateurs (45) pour leurs signaux de réception ainsi qu'éventuellement des convertisseurs analogiques/numériques (46).

7. Dispositif de repérage de cibles qui envoient des ondes acoustiques sous forme d'impulsions, comportant une configuration dipolaire croisée, dans laquelle la distance des hydrophones de chaque paire est supérieure à une demi-longueur d'onde des ondes acoustiques, pour mettre en oeuvre le procédé selon la revendication 5 ou 6, caractérisé en ce des signaux des quatre hydrophones (41, 42, 43, 44) sont commutés sur respectivement un analyseur FFT (51, 52, 53, 54) pour former des spectres de fréquences complexes, en ce qu'il est prévu, pour chaque analyseur FFT (51, 52, 53), un circuit d'exploitation de phase (61, 63 ou 62, 64) pour les spectres de fréquences de chaque paire et de chaque paire de référence prévu, en ce que, respectivement, un circuit de calcul d'angles d'incidence (71, 72) est agencé en aval des circuits d'exploitation de phase (61, 63 ou 62, 64) pour les deux paires et les deux paires de référence afin de déterminer les angles d'incidence à partir des décalages de phase mesurés et les décalages de phase agrandis de multiples de 2π, ainsi que des distances des hydrophones de chaque paire et de chaque paire de référence, et en ce que les circuits de calcul d'angles d'incidence (71, 72) sont connectés à un circuit de comparaison (80).
